# EUROPÄISCHE PATENTANMELDUNG

(11) **EP 4 289 903 A1**
(43) Veröffentlichungstag der Anmeldung: **13.12.2023**
(21) Anmeldenummer: 23177925.7
(22) Anmeldetag: 07.06.2023
(51) Int. Cl.: C09D 5/00

(54) **WÄSSRIGE SPRÜHLACKFORMULIERUNG**

(30) Priorität: 09.06.2022 DE 102022114583
(71) Anmelder: Peter Kwasny GmbH, 74831 Gundelsheim (DE)
(72) Erfinder: KWASNY, Hans-Peter, 74074 Heilbronn (DE); KRANIG, Wolfgang Lothar, 74177 Bad Friedrichshall (DE)
(74) Vertreter: Schneiders & Behrendt Bochum

(57) **Zusammenfassung**

Die Erfindung betrifft eine wässrige Sprühlackformulierung, enthalten in einem Behälter mit einem mechanischen Pumpsystem und einer Sprühdüse, mit 10 bis 60 Gew.-% wenigstens eines Bindemittels in wässriger Dispersion oder Emulsion, 30 bis 60 Gew.-% eines wässrigen Lösungsmittels, übliche Additive, Pigmente, gegebenenfalls Füllstoffe, wobei der Festkörpergehalt der Formulierung im Bereich von 15 bis 50 Gew.-% und der Gehalt an Additiven, Pigmenten und Füllstoffen im Bereich von 20 bis 35 Gew.-% liegt, wobei die Formulierung einen VOC-Gehalt von weniger als 100 g/l aufweist.

## Beschreibung

Die Erfindung betrifft eine wässrige Sprühlackformulierung, die in einem Behälter mit einem mechanischen Pumpsystem und einer Sprühdüse enthalten ist und wenigstens ein Bindemittel in wässriger Dispersion oder Emulsion, ein wässriges Lösungsmittel, übliche Additive, Pigmente und gegebenenfalls Füllstoffe enthält.

Herkömmliche Lackaerosolsystemen bestehen vorwiegend aus lösemittelhaltigen Lacken in Druckbehältern, die mit einem Ventilsystem verschlossen und mit Treibgas unter Druck gesetzt sind. Ein auf das Ventil aufgesetzter Sprühkopf öffnet bei Betätigung das Ventil, sodass der Lack in Form eines Aerosols mithilfe des Treibgases versprüht werden kann. Das Treibgas dient sowohl als Treibmittel zum Ausbringen des Lacks als auch zu dessen Zerstäubung. In der Regel enthalten die Treibgase Dimethylether, Propan, Butan oder Mischungen derselben.

Sowohl die in den Lacksystemen enthaltenen Lösemittel als auch das Treibgas gehen nach dem Ausbringen des Lacks in die umgebende Atmosphäre über und erhöhen deren volatile organische Anteile. Die volatilen organischen Anteile werden zumeist als VOC-Werte ausgewiesen. VOC-Anteile von mehr als 700 g/l sind bei Aerosollacken die Regel.

Neben den hohen VOC-Anteilen sind Aerosollacke durch den hohen Treibgasanteil zudem leicht entzündlich und brennbar und müssen entsprechend gekennzeichnet werden. Die Brennbarkeit erfordert besondere Maßnahmen bei der Lagerung und Handhabung. Es wurden erhebliche Anstrengungen unternommen, um die Brennbarkeit von Aerosollacken herabzusetzen.

In der Folge sind Lacksprühsysteme entwickelt worden, die Lacke auf wässriger Basis oder vorwiegend wässriger Basis verwenden. Dadurch konnten die VOC-Anteile gesenkt werden, je nach Lack und Wasseranteil auf teilweise weniger als 400 g/l. Ein substanzielles weiteres Absenken ist aufgrund der zu verwendenden Treibgase wie Dimethylether, Propan oder Butan nicht möglich. Dem Einsatz von nicht brennbaren Gasen wie Ca2, N2, Luft oder dergleichen sind enge Grenzen gesetzt. Für diese kommt allenfalls eine Zumischung infrage.

Aus dem Bereich der Medizin, Kosmetik und Reinigungsmittel sind zerstäubende. Pumpsysteme, sogenannte spray pumps, bekannt, die eine mechanische Zerstäubung des zumeist in Kunststoffflaschen enthaltenen flüssigen Inhalts erlauben. Diese Pumpsysteme sind in der Lage, Flüssigkeiten aus einem Behälter zu fördern und mithilfe einer Sprühdüse zu zerstäuben. Der Einsatz von Treibgasen ist nicht erforderlich. Druckaufbau im Behälter und Zerstäubung erfolgen rein mechanisch. Beispielhaft sei hier auf die CN 202 638 659 U, DE 10 2016 014 898 A1 und EP 0 298 259 B1 verwiesen.

Die Verwendung eines solchen mechanischen Pumpsystems für die Ausbringung und Zerstäubung von Lacken wäre wünschenswert.

Ein grundsätzliches Problem bei der Entwicklung solcher mechanischer Pumpsysteme ist das Verstopfen der Sprühdüsen. Die Natur der Lacksysteme führt zur Ablagerung von Bindemittel im Düsensystem. Wird die Ausbringung nur kurz unterbrochen oder dauert länger an, so führt u.a. die Verdunstung/das Verdampfen der Lösungsmittel zur Verfestigung des Bindemittels und zur Blockade der Ausbringwege. Dieses Problem kann zwar durch Erhöhung des Anteils flüchtiger Lösungsmittel, wie Aceton, vermindert werden, jedoch erhöhen diese Lösungsmittel die VOC-Anteile. Die Entzündbarkeit/Brennbarkeit solcher Lacke ist damit nach wie vor ein Problem.

Ziel der Erfindung ist die Bereitstellung einer Sprühlackformulierung, die zum einen mit einem mechanischen Punktesystem aus einem Behälter ausgebracht werden kann, ohne dass die Sprühwege verstopfen und zum anderen einen möglichst geringen VOC-Anteil aufweisen.

Entsprechend betrifft die Erfindung eine wässrige Sprühlackformulierung, die in einem Behälter mit einem mechanischen Pumpsystem und einer Sprühdüse enthalten ist, wobei die wässrige Sprühlackformulierung 10 bis 60 Gew.-% wenigstens eines Bindemittels in wässriger Dispersion oder Emulsion, 30 bis 60 Gew.-% Wasser oder einer Mischung aus einem wasserverdünnbarem Lösungsmittels mit Wasser, übliche Additive, Pigmente und gegebenenfalls Füllstoffe enthält und wobei der Festkörpergehalt der Formulierung im Bereich von 15 bis 50 Gew.-% liegt und der Gehalt an Additiven, Pigmenten und Füllstoffen im Bereich von 20-35 Gew.-%. Die Formulierung hat einen VOC-Gehalt von weniger als 100 g/l.

Im Folgenden beziehen sich alle Gewichtsprozentangaben auf die gesamte Sprühlackformulierung, soweit nicht anders angegeben.

Die erfindungsgemäße Sprühlackformulierung ist auf die Ausbringung aus einem Behälter mit einem mechanischen Pumpsystem und einer Sprühdüse abgestimmt und darin enthalten. Ein solcher Behälter kann beispielsweise aus Metall bestehen, wird in der Regel aber aus Kunststoff gefertigt. Derartige Behälter sind insbesondere in der Kosmetik und im Reinigungssektor verbreitet. Das mechanische Pumpsystem und dafür geeignete Sprühdüsen sind an und für sich bekannt.

Die erfindungsgemäße Sprühlackformulierung enthält eine wässrige Dispersion oder Emulsion wenigstens eines Bindemittels in einer Menge von 10 bis 60 Gew.-%, vorzugsweise von 15 bis 40 Gew.-%. Die Dispersion oder Emulsion ist dabei vorformuliert, d. h. sie kann zusätzlich zum Bindemittel übliche Zusatzstoffe und Stabilisatoren, gegebenenfalls auch geringe Mengen organischer Lösungsmittel enthalten. Daneben enthält die Formulierung Wasser, dem ein wasserverträgliches organisches Lösungsmittel zugesetzt sein kann. Vorzugsweise beträgt die Menge an zugesetztem organischen Lösungsmittel nicht mehr als 10 Gew.-%. Bevorzugte organische Lösungsmittel, sind Alkohole und kurzkettige Ketone, insbesondere Alkohole mit zwei oder drei C-Atomen, etwa Ethanol und Aceton.

Die erfindungsgemäße Sprühlackformulierung ist frei von Treibgasen. Soweit flüchtige organische Lösungsmittel darin enthalten sind, ist die Menge dergestalt begrenzt, dass die Formulierung einen VOC-Gehalt von weniger als 100 g/l aufweist. Vorzugsweise liegt der VOC-Gehalt unter 50 g/l.

Als besonders geeignete Bindemittel haben sich Polyurethane, Alkyd-modifiziertem Polyurethane, Alkyde, modifizierte Alkyde, Polyamide und Mischungen derselben erwiesen. Diese Bindemittel weisen eine geringe Tendenz zur Verstopfung der Sprühwege auf. Sie liegen in wässriger Dispersion oder Emulsion vor.

Weitere Bestandteile der Sprühlackformulierung sind übliche Additive und Pigmente, wie sie für Lackformulierungen verwandt werden, sowie gegebenenfalls auch Füllstoffe. Alle diese Zusätze können in ihren Formulierungen geringe Mengen flüchtiger organischer Lösungsmittel enthalten, die in die Berechnung der VOC-Werte eingehen. Der Gehalt an Additiven in der Sprühlackformulierung liegt vorzugsweise im Bereich von 1,0 bis 5,0 Gew.-%, der an Pigmenten im Bereich von 2,5 bis 10 Gew.-%. Füllstoffe können in der Sprühlackformulierung bis zu einer Menge von 25 Gew.-% enthalten sein.

Insgesamt weist die erfindungsgemäße Sprühlackformulierung einen Festkörpergehalt im Bereich von 15 bis 50 Gew.-% auf, vorzugsweise von 18 bis 35 Gew.-%.

Das erfindungsgemäße Sprühlacksystem kann für beliebige Behälter mit einem mechanischen Pumpsystem und einer Sprühdüse verwandt werden. Es ist insbesondere für Behältergrößen von 50 bis 1000 ml geeignet.

Die Erfindung wird durch die nachstehenden Beispiele näher erläutert. Die Lacke 1 bis 3 stellen Vergleichsbeispiele dar.

Sechs Vergleichslacke wurden nach Maßgabe der Angaben in Tab. I hergestellt.

Lack 1 war eine Suspension aus Nitrocellulosewolle und einem organisch angelösten Alkyd als Bindemittel. Die Formulierung enthielt 60 Gew.-% Aceton und 11 Gew.-% weitere Lösungsmittel. Es handelte sich um eine konventionelle Sprühlackformulierung auf Basis organischer Lösungsmittel. Der Lack konnte ohne weiteres ausgebracht werden, die Sprühwege blieben frei. Der VOC-Gehalt betrug 717,6 g/l.

Lack 2 war eine wässrige Dispersion von Alkyd- modifiziertem Polyurethan (PU). Die Formulierung enthielt 3 Gew.-% Wasser und 27 Gew.-% Ethanol als Lösungsmittel. Die Ausbringung führte zur Verstopfung der Sprühwege (Stem). Es ergab sich kein brauchbarer Sprüh. Der VOC-Gehalt der Formulierung betrug 310,2 g/l.

Lack 3 war eine Dispersion von Polyurethan (PU) in Wasser. Die Formulierung enthielt 50 Gew.-% Ethanol und 1,3 Gew.-% Wasser. Die Ausbringung führte zur Verstopfung der Sprühwege (Stem). Der VOC-Gehalt betrug 594,4 g/l.

Lack 4 war eine Dispersion von Alkyd und Alkyd-modifiziertem Polyurethan in Wasser. Die Formulierung enthielt 25 Gew.-% Wasser und 6,0 Gew.-% Ethanol. Die Sprühwege blieben bei der Ausbringung offen, Sprühvorgänge konnten auch nach einiger Zeit problemlos wiederholt werden. Der VOC-Gehalt betrug 70,4 g/l.

Lack 5 war eine Dispersion von Polyurethan und Alkyd in Wasser. Die Formulierung enthielt 54 Gew.-% Wasser als Lösungsmittel. Die Sprühwege blieben bei der Ausbringung offen, Sprühgänge konnten auch nach einiger Zeit problemlos wiederholt werden. Der VOC-Gehalt war 18,7 g/l.

Eine Auswertung der Sprühergebnisse zeigte für die Lacke 4 und 5 gute Werte, was die Atomisierung, Deckkraft, den Verlauf und das Standvermögen anbetrifft. Demgegenüber fielen die nicht erfindungsgemäßen Lacke 1 bis 3 stark ab.

### Pump Lackierergebnisse / Erkenntnisse

| | **Lack 5** | **Lack 4** | **Lack 3** | **Lack 2** | **Lack 1** |
|---|---|---|---|---|---|
| | **RAL 3000** | **RAL 3000** | **Roserot** | **bright red** | **RAL 3000** |
| **Bindemittelbasis** | 33 % PU + Alkyd | 59% Alkyd + PU alkyd mod | 16,5 % PU | 40,5 % PU alkyd mod | 22 % NC + Alkyd |
| Lösemittel: | Wasser 54% | Wasser 25%, Ethanol 6°,6 | Ethanol 50%, Wasser 1,3% | Wasser 3%, Ethanol 27°,6 | Aceton 60%, andere 11% |
| Pigmente | 8,60% | 5,40% | 8,00% | 6,60% | 3,50% |
| Additive | 4,4°,6 | 4,60% | 3,80% | 5,10% | 1,40% |
| Füllstoffe | | | 20,40% | 17,80% | 2,10% |
| VOC | | | | | |
| **Festkörper** | ca. 20,6% | ca. 30,6°,6 | ca. 33,6°,6 | ca. 40,4% | ca. 19,3°,6 |
| **Viskosität 4mm** | ca. 58s | ca. 70s | ca. 21s | ca. 50s | ca. 15s |
| **TSD pro SG*** | Ca. 20-30 µm | Ca. 35-45 µm | Ca. 45-55 µm | Ca. 55-65 µm | Ca. 30-40 µm |
| **Trocknung** | | | | | |
| **TSD** | 25µm | 38µm | ca. 50 µm | ca. 60 µm | 35µm |
| **TG1** | 00 : 45 h | 00 : 30 h | 00 : 10 h | 00 : 20 h | 00 : 15 h |
| **TG3** | 01 : 00 h | 00 : 45 h | 00 : 30 h | 00 : 30 h | 00 : 30 h |
| **TG5** | 06 : 00 h | 05 : 00 h | 00 : 40 h | 00 : 45 h | 05 : 00 h |
| **Stem nach sprühen** | Offen | Offen | Sehr verstopft | Verstopft | offen |
| Stem öffnen | Offen | Offen | Sehr schwer | Schwer | offen |
| **Sprühkopf 1762** | | | | | |
| Funktion | Sprüht | Sprüht | Lack-Strahl | Lack-Strahl | sprüht |
| Atomisierung | 0-1 | 2 | 5 | 5 | 3 |
| Deckkraft | 0-1 | 0-1 | 5 | 5 | 4 |
| Verlauf | 1 | 1 | 5 | 5 | 3 |
| Standvermögen | 1 | 2 | 5 | 5 | 5 |

| | | | | | |
|---|---|---|---|---|---|
| 0 = sehr gut, 5 = sehr schlecht Abkürzungen: TSD: Trockenschichtstärke, SG: Spritzgang, TG: Trockengrad | | | | | |

### Fazit:

Ventil (0,15mi Ausbringmenge) und Ventil 2 (0,2ml Ausbringemnge) zeigten bei der Atomisierung keinen Unterschied. Sprühköpfe praktisch ohne Einfluss.

| **Spezifikationen:** | |
|---|---|
| Lieferant | Coster |
| Ventil 1: | 32 MSP 134/150 - LPS 200 mm |
| Ventil 2: | 32 MSP 134/200 - LPS 200 mm |
| Sprühkopf 1762: | V041762 |

## Patentansprüche

1. Wässrige Sprühlackformulierung, enthalten in einem Behälter mit einem mechanischen Pumpsystem und einer Sprühdüse, mit
- 10 bis 60 Gew.-% wenigstens eines Bindemittels in wässriger Dispersion oder Emulsion,
- 30 bis 60 Gew.-% eines wässrigen Lösungsmittels,
- übliche Additive,
- Pigmente
- gegebenenfalls Füllstoffe,
wobei der Festkörpergehalt der Formulierung im Bereich von 15 bis 50 Gew.-% liegt und der Gehalt an Additiven, Pigmenten und Füllstoffen im Bereich von 20 bis 35 Gew.-%,
**dadurch gekennzeichnet, dass** die Formulierung einen VOC-Gehalt von weniger als 100 g/l aufweist.

2. Wässrige Sprühlackformulierung nach Anspruch 1, **dadurch gekennzeichnet, dass** sie einen VOC-Gehalt von weniger als 50 g/l aufweist.

3. Wässrige Sprühlackformulierung nach Anspruch 1 oder 2, **dadurch gekennzeichnet, dass** die Bindemittel wässrige Dispersionen oder Emulsionen von Polyurethan, Alkyd-modifiziertem Polyurethan, Alkyd, Polyamid oder Mischungen davon sind.

4. Wässrige Sprühlackformulierung nach einem der vorstehenden Ansprüche, **gekennzeichnet durch** einen Bindemittelanteil von 15 bis 40 Gew.-%.

5. Wässrige Sprühlackformulierung nach einem der vorstehenden Ansprüche, **dadurch gekennzeichnet, dass** das wässrige Lösungsmittel wenigstens 90 Gew.-% Wasser und bis zu 10 Gew.-% wasserverträgliches organisches Lösungsmittel enthält.

6. Wässrige Sprühlackformulierung nach Anspruch 5, **dadurch gekennzeichnet, dass** das organische Lösungsmittel ein Alkohol, insbesondere mit 2 oder 3 C-Atomen und besonders bevorzugt Ethanol ist.

7. Wässrige Sprühlackformulierung nach einem der vorstehenden Ansprüche, **gekennzeichnet durch** einen Festkörpergehalt der Formulierung im Bereich von 18 bis 35 Gew.-% liegt.

8. Wässrige Sprühlackformulierung nach einem der vorstehenden Ansprüche, **gekennzeichnet durch** einen Gehalt an Pigmenten von 2,5 bis 10 Gew.-%.

9. Wässrige Sprühlackformulierung nach einem der vorstehenden Ansprüche, **gekennzeichnet durch** einen Gehalt an Additiven von 1,0 bis 5,0 Gew.-%.

10. Wässrige Sprühlackformulierung nach einem der vorstehenden Ansprüche, **gekennzeichnet durch** einen Gehalt an Füllstoffen von bis zu 25 Gew.-%.

11. Wässrige Sprühlackformulierung nach einem der vorstehenden Ansprüche, **dadurch gekennzeichnet, dass** das Lösungsmittel Wasser ist.
